# EUROPÄISCHE PATENTSCHRIFT

(11) **EP 1 137 733 B1**
(45) Veröffentlichungstag und Bekanntmachung des Hinweises auf die Patenterteilung: **12.04.2006**
(21) Anmeldenummer: 99972241.6
(22) Anmeldetag: 05.11.1999
(51) Int. Cl.: C09J 4/00, C08F 220/30, C09J 4/06, C08F 283/01, C08F 290/14, F16B 13/14

(54) **ZWEIKOMPONENTENMASSEN FÜR CHEMISCHE BEFESTIGUNGEN**
TWO-COMPONENT MATERIAL FOR CHEMICAL FIXING MEANS
MATIERE A DEUX COMPOSANTES DESTINEE A DES LIAISONS CHIMIQUES

(30) Priorität: 16.11.1998 DE 19852720
(43) Veröffentlichungstag der Anmeldung: 04.10.2001
(73) Patentinhaber: fischerwerke Artur Fischer GmbH & Co. KG, 72178 Waldachtal (DE)
(72) Erfinder: WEBER, Christian, D-79312 Emmendingen (DE); SCHÄTZLE, Joachim, D-79341 Kenzingen (DE); GRÜN, Jürgen, D-79268 Bötzingen (DE); KIEFER, Andreas, D-79235 Vogtsburg (DE)
(86) Internationale Anmeldenummer: PCT/EP1999/008490
(87) Internationale Veröffentlichungsnummer: WO 2000/029498

(56) Entgegenhaltungen:
- DE-A- 3 514 031
- DE-C- 4 121 832
- US-A- 5 256 723

## Beschreibung

Die Verwendung von Reaktivharzmassen auf Basis von ungesättigten Polyesterharzen, Vinylesterharzen, Vinylurethanharzen oder Epoxidharzen als Kleber und Haftmittel für die chemische Befestigung ist seit langem bekannt. Es handelt sich dabei um Zweikomponentensysteme, wobei eine Komponente das Reaktivharz und die andere Komponente den Härter enthält. Andere übliche Bestandteile, wie Füllmittel, Beschleuniger, Stabilisatoren, Lösungsmittel einschließlich Reaktivverdünner, können in der einen oder anderen Komponente enthalten sein.

Eine derartige Zweikomponentenmasse ist in der Druckschrift DE 41 21 832 C1 beschrieben. Diese bekannte Masse besteht aus 2,2 Bis[4 Methacryloxyethyloxyphenylpropan mit Zugabe von ungesättigtem Polyesterharz und/oder Vinylesterharz, und/oder Acrylharz, und/oder Vinylurethanharz oder ihre Mischung.

Eine derartige Masse weist den Vorteil auf, daß sie kein Styrol enthält und sich dadurch für viele Anwendungsbereiche eignet.

Bei der Befestigung in einem feuchten Bohrloch treten jedoch Minderungen der Haftung zur Bohrlochwandung auf, was zur Reduzierung der Verbundfestigkeit führt.

US 5,256,723 nennt durch Umsetzung von Epoxyderivaten von Bisphenolen mit Acrylsäuren oder Bisphenolen selbst erhältliche Ester von Acrylsäuren, bei denen beide endständigen OH-Gruppen verestert sind. Auch DE 35 14 031 nennt durch Umsetzung von Epoxyderivaten von Bisphenolen mit Acrylsäuren erhältliche Ester von Acrylsäuren, bei denen beide endständigen OH-Gruppen verestert sind.

Die Aufgabe der vorliegenden Erfindung besteht darin, eine strukturell neue Verbundmasse bereitzustellen, die in einem feuchten Bohrloch gute Haftung zur Bohrlochwandung aufweist und hohe Festigkeitswerte sichert.

Es wurde nun gefunden, dass diese Aufgabe gelöst wird, wenn man als härtbares Kunstharz ein Monoacrylat und/oder Monomethacrylat eines alkoxylierten Bisphenols verwendet, wobei besonders gute Hafteigenschaften zur Bohrlochwandung erreicht werden, wenn das Kunstharz eine Verbindung der Formel 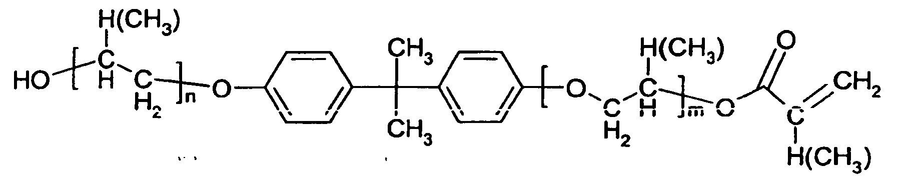 enthält, mit m und n gleich 1 bis 5. Die Kunstharze sind Monoacrylate, die eine Viskosität von 100 bis 5000, insbesondere von 200 bis 3500 mPa s, gemessen ohne Thixotropiermittel und in Abwesenheit von Füllstoffen bei 23 °C haben. Die Viskosität des Kunstharzes kann durch die Kettenlänge der Alkoxygruppen eingestellt werden.

Die Harzkomponente enthält ein Mono(Meth)acrylat eines allkoxylierten Bisphenols, zum Beispiel Bisphenol A, Bisphenol F, Bisphenol S, mit einem Alkoxid, zum Beispiel Ethylenoxid oder Propylenoxid.

Das Kunstharz kann bis zu 90 Gew% andere härtbare Harze wie Polyester, Vinylester, Epoxyacrylatharz, Vinylurethanester enthalten. Die Menge der in einer bevorzugten Ausführungsform der Erfindung vorliegenden Comonomere im Kunstharz soll nicht die Menge von 60 Gew% übersteigen. Als Comonomere können Acrylate, wie Trimethylolpropantriacrylat und -methacrylat, Butandioldimethacrylat, Ethylenglykoldimethacrylat, Polyethylenglykoldimethacrylat, Neopentylglykoldimethacrylat, Pentaerytritdimethacrylat, 2-Hydroxypropylmethacrylat, Acetacetoxyethylmethacrylat, enthalten sein.

Falls für die Peroxidhärtung Beschleuniger erforderlich sind, werden sie zusammen mit Harz, d.h. getrennt vom Härter, angeordnet.

Geeignete Beschleuniger sind aromatische Amine, wie N,N-Dimethylanilin, N,N-Diethylanilin, Toluidine und Xylidine. Die Beschleuniger sind im Kunstharz in Mengen von 0,5 bis 5 Gew% enthalten.

Das Kunstharz kann auch Füllstoffe enthalten. Als verstärkende Füllstoffe für die Verbundmasse dienen zum Beispiel Quarz, Glas, Korund, Porzellan, Steingut, Talkum, Kreide, Zement. Die Füllstoffe werden in Form von Sand, Mehl oder speziellen Formkörpern, z.B. als Kugeln, entweder der Harzkomponente und/oder dem Härter zugemischt. Die Füllstoffe können als Fasern eingesetzt werden.

Als Härtungsmittel werden zum Beispiel Dibenzoylperoxid, Methylethylketonperoxid in Mengen von 0,5 bis 10, vorzugsweise 1-6 Gew%, eingesetzt.

Die erfindungsgemäße Verbundmasse weist eine sehr gute Haftung auch zum feuchten Untergrund auf, so dass derartige Verankerungen auch bei stark durchfeuchtetem Beton hohe Bruchlasten bei sehr niedriger Bruchdehnung aufweisen.

Bevorzugt ist eine Klebemasse, worin die Monoacrylat- und/oder Monomethacrylat-Verbindung eines alkoxylierten Bisphenols ein Umsetzungsprodukt ist aus
A) 1 Mol Bisphenol A oder F oder S
B) mehr als 2 Mole Ethylenoxid oder Propylenoxid und
B) 1 Mol Methacrylsäure oder Acrylsäure.

Weitere Ausführungsformen der Erfindung betreffen:
(i) Patrone, enthaltend die erfindungsgemäße Klebemasse, dadurch gekennzeichnet, dass sie eine oder mehrere Kammern umfasst, in denen Kunstharz und Härtungsmittel enthalten sind;
(ii) Kartusche, enthaltend eine erfindungsgemäße Klebemasse, dadurch gekennzeichnet, dass sie zwei oder mehr Kammern umfasst, in welchen der Kunstharzmörtel und das Härtungsmittel getrennt voneinander angeordnet sind;
(iii) Schlauchfolienbeutel, enthaltend die erfindungsgemäße Klebemasse, dadurch gekennzeichnet, dass sie zwei oder mehrere Schlauchbeutel umfasst, in welchen Kunstharzmörtel und Härtungsmittel voneinander getrennt angeordnet sind; sowie
(iv) die Verwendung der Klebemasse nach Anspruch 1 zur chemischen Befestigung von Ankerstangen, Eisenarmierungen, Schrauben und Dübeln in Bohrlöchern.

### Beispiel 1

Verbundanker bestehend aus Glaspatrone M12 und
Ankerstange M12 x 160 mm mit 90°-Dachschneide
Materialqualität: 10.9
Bohr-Ø: 14 mm
Verankerungstiefe: 110 mm

### Harzkomponente

| | |
|---|---|
| 3,36 g | Diethoxyliertes Bisphenol-A-Monomethacrylat |
| 0,21 g | Vinylesterharz Esterzahl EZ = 245 mg KOH/g |
| 0,50 g | Butandioldimethacrylat |
| 0,04 g | Dimethylparatoluidin |
| 9,20 g | Quarzsand (Körnung 1,2 - 1,8 mm) |

### Härterkomponente

| | |
|---|---|
| 0,42 g | Dibenzoylperoxid (50 Gew% in Dicyclohexylphthalat) |

gesetzt in feuchtem Beton der Güte B 25
Aushärtezeit: 0,5 Stunden
Auszugslast (F) bei Auszugswert 0,5 mm (F_{u0,5})
F_{U0,5} = 65 kN
Fₘₐₓ = 72 kN

### Beispiel 2

Verbundanker bestehend aus Glaspatrone M12 und
Ankerstange M12 x 160 mm mit 90°-Dachschneide
Materialqualität: 10.9
Bohr-Ø: 14 mm
Verankerungstiefe: 110 mm

### Harzkomponente

| | |
|---|---|
| 1,39 g | Monomethacrylat wie im Beispiel 1 |
| 2,18 g | Vinylesterharz wie im Beispiel 1 |
| 0,50 g | Butandioldimethacrylat |
| 0,04 g | Dimethylparatoluidin |
| 9,20 g | Quarzsand (Körnung 1,2 - 1,8 mm) |

### Härterkomponente

| | |
|---|---|
| 0,42 g | Dibenzoylperoxid (50 Gew% in Dicyclohexylphthalat) |

gesetzt in feuchtem Beton der Güte B 25
Aushärtezeit: 0,5 Stunden
F_{U0,5} = 50 kN
Fₘₐₓ = 69 kN

### Beispiel 3

Verbundanker bestehend aus Glaspatrone M12 und
Ankerstange M12 x 160 mm mit 90°-Dachschneide
Materialqualität: 10.9
Bohr-Ø: 14 mm
Verankerungstiefe: 110 mm

### Harzkomponente

| | |
|---|---|
| 0,47 g | Monomethacrylat wie im Beispiel 1 |
| 3,10 g | Vinylesterharz wie im Beispiel 1 |
| 0,50 g | Butandioldimethacrylat |
| 0,04 g | Dimethylparatoluidin |
| 9,2 g | Quarzsand (Körnung 1,2 - 1,8 mm) |

### Härterkomponente

| | |
|---|---|
| 0,42 g | Dibenzoylperoxid (50 Gew% in Dicyclohexylphthalat) |

gesetzt in feuchtem Beton der Güte B 25
Aushärtezeit: 0,5 Stunden
F_{U0.5} = 48 kN
Fₘₐₓ = 61 kN

### Vergleichsbeispiel

Verbundanker bestehend aus Glaspatrone M12 und
Ankerstange M12 x 160 mm mit 90°-Dachschneide
Materialqualität: 10.9
Bohr-Ø: 14 mm
Verankerungstiefe: 110 mm

### Harzkomponente

| | |
|---|---|
| 3,57 g | Vinylesterharz wie im Beispiel 1 |
| 0,50 g | Butandioldimethacrylat |
| 0,04 g | Dimethylparatoluidin |
| 9,2 g | Quarzsand (Körnung 1,2 - 1,8 mm) |

### Härterkomponente

| | |
|---|---|
| 0,42 g | Dibenzoylperoxid (50 Gew% in Dicyclohexylphthalat) |

gesetzt in feuchtem Beton der Güte B 25
Aushärtezeit: 0,5 Stunden
F_{U0,5} = 38 kN
Fₘₐₓ = 56 kN

## Patentansprüche

1. Zweikomponentenmasse für die chemische Befestigung, enthaltend
1. ein radikalisch härtbares Kunstharz und
2. ein Härtungsmittel für das Kunstharz,
**dadurch gekennzeichnet, dass** das Kunstharz eine Viskosität bei 23 °C zwischen 100 und 5000 mPa·s aufweist und eine Monoacrylat- und/oder Monomethacrylat-Verbindung eines alkoxylierten Bisphenols enthält.

2. Klebemasse nach Anspruch 1, **dadurch gekennzeichnet, dass** das Kunstharz eine Verbindung der Formel 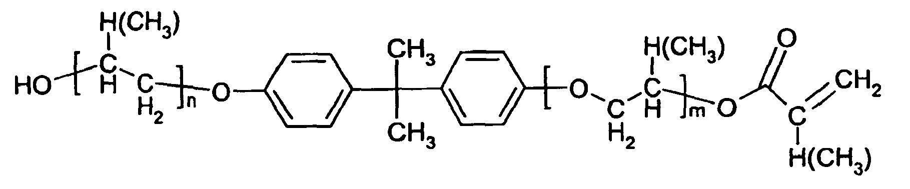 enthält, wobei m und n von 1 bis 5 sind.

3. Klebemasse nach Anspruch 1, **dadurch gekennzeichnet, dass** die Monoacrylat- und/oder Monomethacrylat-Verbindung eines alkoxylierten Bisphenols ein Umsetzungsprodukt ist aus
A) 1 Mol Bisphenol A oder F oder S
B) mehr als 2 Mole Ethylenoxid oder Propylenoxid und
C) 1 Mol Methacrylsäure oder Acrylsäure.

4. Klebemasse nach Anspruch 1, **dadurch gekennzeichnet, dass** das Kunstharz 0 bis 60 Gew.% eines Comonomeren, Beschleuniger in Mengen von 0,5 bis 5 Gew% und/oder Füllstoffe enthält.

5. Klebemasse nach Anspruch 1, **dadurch gekennzeichnet, dass** das Kunstharz von 0 bis 90 Gew% ungesättigtes Polyesterharz, und/oder Vinylesterharz, und/oder Epoxyacrylatharz und/oder Vinylurethanharz enthält.

6. Patrone, enthaltend die Klebemasse nach Anspruch 1, **dadurch gekennzeichnet, dass** sie eine oder mehrere Kammern umfasst, in denen Kunstharz und Härtungsmittel enthalten sind.

7. Kartusche, enthaltend eine Klebemasse nach Anspruch 1, **dadurch gekennzeichnet, dass** sie zwei oder mehr Kammern umfasst, in welchen der Kunstharzmörtel und das Härtungsmittel getrennt voneinander angeordnet sind.

8. Schlauchfolienbeutel, enthaltend die Klebemasse nach Anspruch 1, **dadurch gekennzeichnet, dass** sie zwei oder mehrere Schlauchbeutel umfasst, in welchen Kunstharzmörtel und Härtungsmittel voneinander getrennt angeordnet sind.

9. Verwendung der Klebemasse nach Anspruch 1 zur chemischen Befestigung von Ankerstangen, Eisenarmierungen, Schrauben und Dübeln in Bohrlöchern.

## Revendications

1. Masse à deux composantes pour la liaison chimique contenant
1. une résine synthétique durcissable de façon radicalaire et
2. un agent de durcissement pour la résine synthétique,
**caractérisée en ce que**, la résine synthétique présente une viscosité à 23°C située entre 100 et 5 000 mPa•s et contient un composé monoacrylate et/ou monométhacrylate d'un bisphénol alcoxylé.

2. Masse adhésive selon la revendication 1, **caractérisée en ce que** la résine synthétique comprend un composé de formule 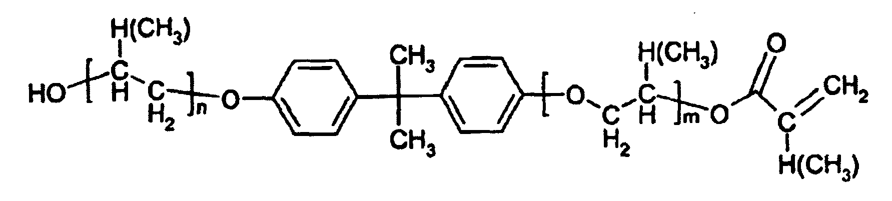 dans laquelle m et n valent de 1 à 5.

3. Masse adhésive selon la revendication 1, **caractérisée en ce que** le composé monoacrylate et/ou monométhacrylate d'un bisphénol alcoxylé est un produit de conversion comprenant :
A) 1 mole de bisphénol A ou F ou S
B) plus de 2 moles d'oxyde d'éthylène ou d'oxyde de proprylène et
C) 1 mole d'acide méthacrylique ou d'acide acrylique.

4. Masse adhésive selon la revendication 1, **caractérisée en ce que** la résine synthétique contient de 0 à 60 % en poids d'un comonomère, un accélérateur en quantités de 0,5 à 5 % en poids et/ou des charges.

5. Masse adhésive selon la revendication 1, **caractérisée en ce que** la résine contient de 0 à 90 % en poids de résine de polyester insaturé et/ou une résine d'ester vinylique et/ou une résine époxyacrylate et/ou une résine de vinyluréthane.

6. Cartouche comprenant la masse adhésive selon la revendication 1, **caractérisée en ce qu'**elle comprend une ou plusieurs chambres dans lesquelles la résine synthétique et l'agent de durcissement sont contenus.

7. Cartouche jetable comprenant une masse adhésive selon la revendication 1, **caractérisée en ce qu'**elle comprend deux ou plusieurs chambres dans lesquelles le mortier de la résine synthétique et l'agent de durcissement sont agencés séparément l'un de l'autre.

8. Unité de sachets tubulaire contenant la masse adhésive selon la revendication 1, **caractérisée en ce qu'**elle comprend deux ou plusieurs sachets tubulaires dans lesquels le mortier de la résine synthétique et l'agent de durcissement sont agencés séparément l'un de l'autre.

9. Utilisation de la masse adhésive selon la revendication 1 pour la liaison chimique des tiges d'ancrage, des armatures en fer, des vis et des chevilles dans les trous de forage.

## Claims

1. Two-component composition for chemical fixing, comprising
1. a free-radical-curable synthetic resin and
2. a curing agent for the synthetic resin,
**characterised in that** the synthetic resin has a viscosity, at 23°C, of between 100 and 5000 mPa.s and comprises a monoacrylate and/or monomethacrylate compound of an alkoxylated bisphenol.

2. Adhesive composition according to claim 1, **characterised in that** the synthetic resin comprises a compound of formula 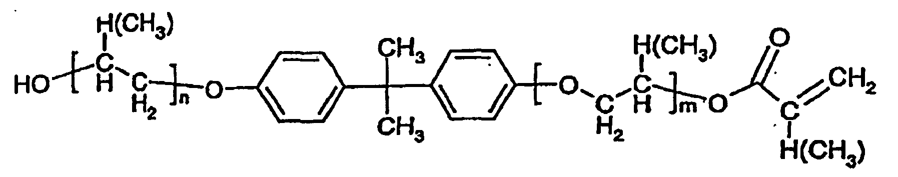 wherein m and n are from 1 to 5.

3. Adhesive composition according to claim 1, **characterised in that** the monoacrylate and/or monomethacrylate compound of an alkoxylated bisphenol is a reaction product of
A) 1 mole of bisphenol A or F or S
B) more than 2 moles of ethylene oxide or propylene oxide and
C) 1 mole of methacrylic acid or acrylic acid.

4. Adhesive composition according to claim 1, **characterised in that** the synthetic resin comprises from 0 to 60 % by weight of a comonomer, accelerator(s) in amounts of from 0.5 to 5 % by weight and/or fillers.

5. Adhesive composition according to claim 1, **characterised in that** the synthetic resin comprises from 0 to 90 % by weight of an unsaturated polyester resin and/or vinyl ester resin and/or epoxy acrylate resin and/or vinyl urethane resin.

6. Cartridge comprising the adhesive composition according to claim 1, **characterised in that** it comprises one or more chambers containing synthetic resin and curing agent.

7. Capsule comprising an adhesive composition according to claim 1, **characterised in that** it comprises two or more chambers, in which the synthetic resin mortar and the curing agent are located separately from one another.

8. Tubular film container comprising the adhesive composition according to claim 1, **characterised in that** two or more tubular containers are provided, in which synthetic resin mortar and curing agent are located separately from one another.

9. Use of the adhesive composition according to claim 1 for the chemical fixing of anchor rods, iron reinforcements, screws and plugs in drillholes.
